# EUROPEAN PATENT SPECIFICATION

(11) **EP 2 494 855 B1**
(45) Date of publication and mention of the grant of the patent: **14.02.2018**
(21) Application number: 10857620.8
(22) Date of filing: 29.10.2010
(51) Int. Cl.: H05K 1/02

(54) **SPD FILMS AND LIGHT VALVE LAMINATES WITH IMPROVED BUS-BAR CONNECTIONS**
SPD-FILME UND LICHTVENTILBESCHICHTUNGEN MIT VERBESSERTEN BUSSCHIENENVERBINDUNGEN
COUCHES À DÉFORMATION PLASTIQUE INTENSE ET STRATIFIÉS DE VALVE OPTIQUE DOTÉS DE CONNEXIONS DE BARRE OMNIBUS AMÉLIORÉES

(30) Priority: 30.10.2009 US 200961256836 P
(43) Date of publication of application: 05.09.2012
(73) Proprietor: RESEARCH FRONTIERS INCORPORATED, Woodbury New York 11797 (US)
(72) Inventor: WANG, Dongyan, Ithaca New York 14850 (US); SLOVAK, Steven M., N. Massapequa New York 11758 (US); SAXE, Robert L., New York New York 10075 (US)
(74) Representative: Walcher, Armin
(86) International application number: PCT/US2010/054626
(87) International publication number: WO 2012/039725

(56) References cited:
- WO-A1-94/18599
- WO-A1-2009/041526
- US-A1- 2004 140 571
- US-A1- 2005 227 061
- US-A1- 2007 068 622
- US-A1- 2009 153 944
- US-B1- 6 479 763

## Description

### Field of the Disclosure

The present disclosure is directed to films and laminations of films for use in light valves which include liquid particle suspensions. These light valves are generally referred to herein as suspended particle devices or SPD light valves, or simply as SPDs. More specifically, the present disclosure relates to improved bus-bars of such SPD films that provide enhanced adhesion of the bus-bar material to the electrodes incorporated into the SPDs.

### Related Art

SPD light valves have been known for more than seventy years for use in the modulation of light. Such light valves have been proposed for use in numerous applications during that time including, e.g., alphanumeric displays and television displays; filters for lamps and automotive headlamps, cameras, displays and optical fibers; and windows, sunroofs, toys, sunvisors, eyeglasses, goggles, mirrors, light pipes and the like to control the amount of light passing therethrough or reflected therefrom as the case may be. Examples of windows include, without limitation, architectural windows for commercial buildings, greenhouses and residences, windows for automotive vehicles, boats, trains, planes and spacecraft, windows for doors including peepholes, and windows for appliances such as ovens and refrigerators, including compartments thereof. Light valves of the type described herein are also known, as indicated above, as suspended particle devices or SPDs.

As used herein, the term "light valve" describes a cell formed of two walls that are spaced apart by a small distance, with at least one wall being transparent. The walls have electrodes thereon, usually in the form of transparent, electrically conductive coatings. Optionally the electrodes on the walls may have thin transparent dielectric overcoatings thereon. The cell includes a light-modulating element (sometimes herein referred to as an activatable material) which may, without limitation, be either a liquid suspension of particles, or all or a portion of the entire element may include a plastic film in which droplets of a liquid suspension of particles are distributed.

The liquid suspension (sometimes herein referred to as a liquid light valve suspension or as a light valve suspension) typically includes small particles suspended in a liquid suspending medium. In the absence of an applied electrical field, the particles in the liquid suspension assume random positions due to Brownian movement. Hence, a beam of light passing into the cell is reflected, transmitted or absorbed depending upon the cell structure, the nature and concentration of the particles and the energy content of the light. The light valve is thus relatively dark in the OFF state. However, when an electric field is applied through the liquid light valve suspension in the light valve, the particles become aligned, thus allowing, for many suspensions, most of the light to pass through the cell. The light valve is thus relatively transparent in the ON state. The electrical field can be supplied from any electrical source including, but not limited to, house current, battery and/or photovoltaic/solar cells.

For many applications it is preferable for all or part of the activatable material, i.e., the light modulating element, to be a plastic film rather than a liquid suspension. For example, in a light valve used as a variable light transmission window, a plastic film in which droplets of liquid suspension are distributed is preferable to a liquid suspension alone because hydrostatic pressure effects, e.g., bulging associated with a high column of light valve suspension, can be avoided through use of a film and the risk of possible leakage can also be avoided. Another advantage of using a plastic film is that, in a plastic film, the particles are generally present only within very small droplets and, hence, do not noticeably agglomerate when the film is repeatedly activated with a voltage.

A light valve film (also sometimes herein referred to as an SPD film) as used herein means a film or sheet, or more than one thereof including a suspension of particles used or intended for use in an SPD light valve. Such light valve film usually includes a discontinuous phase of a liquid with dispersed particles, such discontinuous phase being dispersed throughout a continuous phase enclosed within one or more rigid or flexible solid films or sheets. A cured emulsion, which may be part of a light valve film, is sometimes also referred to as a film or film layer. The light valve film may also include one or more additional layers such as, without limitation, a film, coating or sheet or combination thereof, which may provide the light valve film with one or more of, for example, (1) scratch resistance, (2) protection from ultraviolet radiation, (3) reflection of infrared energy, (4) electrical conductivity for transmitting an applied electric or magnetic field to the activatable material, (5) dielectric overcoatings, (6) color tinting and (7) acoustic control.

The rise time and the decay time of an SPD film becomes progressively slower as the temperature of the film becomes colder. This is due to the fact that the viscosity of the suspending liquid in the droplets increases as the temperature decreases. In order to overcome the effect the SPD film may also include a transparent layer having thereon a transparent conductive coating such as indium tinoxide (ITO) through which a current can be passed to heat the SPD film.

A common (but non-limiting) construction for an SPD film has five layers, namely, from one side to the other: (1) a first sheet of polyethylene terephthalate ("PET") plastic, conveniently 5-7 mils in thickness, (2) a very thin transparent, electrically conductive coating of ITO, acting or capable of acting as an electrode, on said first sheet of PET, (3) a layer of cured (i.e., cross-linked) SPD emulsion, usually 2-5 mils in thickness and, (4) a second ITO coating acting or capable of acting as an electrode on (5) a second PET plastic substrate. As stated previously, additional layers which provide other functions may optionally be added to the five-layer SPD film described above. Typically, copper foil, conductive fabric or the like are affixed to the electrodes so that they extend beyond the perimeter of the SPD film for convenient connection to a suitable voltage source. Furthermore the SPD film may be laminated, for example, with transparent hot melt adhesive films and/or glass or thicker transparent plastic sheets to provide strength and rigidity and to protect various parts of the combined unit from environmental stresses which may, otherwise, damage its performance characteristics.

U.S. Patent No. 5,409,734 described an example of a type of non-cross-linked light valve film that is made by phase separation from a homogeneous solution. Light valve films made by cross-linking (curing) of emulsions are also known.

A variety of liquid light valve suspensions are well known in the art and such suspensions are readily formulated according to techniques well-known to one of ordinary skill therein. The term liquid light valve suspension, as noted above, when used herein means a liquid suspending medium in which a plurality of small particles are dispersed. The liquid suspending medium comprises one or more non-aqueous, electrically resistive liquids in which there is preferably dissolved at least one type of polymeric stabilizer which acts to reduce the tendency of the particles to agglomerate and to keep them dispersed and in suspension.

Liquid light valve suspensions useful in the present invention may include any of the so-called prior art liquid suspending media previously proposed for use in light valves for suspending the particles. Liquid suspending media known in the art which are useful herein include, but are not limited to, the liquid suspending media disclosed in U.S. Patent Nos. 4,247,175, 4,407,565, 4,772,103, 5,409,734, 5,461,506, 5,463,492, and 6,936,193. In general one or both of the suspending medium or the polymeric stabilizer typically dissolved therein is chosen so as to maintain the suspended particles in gravitational equilibrium.

The polymeric stabilizer, when employed, can be a single type of solid polymer that bonds to the surface of the particles, but which also dissolves in the non-aqueous liquid(s) which comprise the liquid suspending medium. Alternatively, there may be two or more solid polymeric stabilizers serving as a polymeric stabilizer system. For example, the particles can be coated with a first type of solid polymeric stabilizer such as nitrocellulose which, in effect, when dissolved, provides a plain surface coating for the particles, together with one or more additional types of solid polymeric stabilizer that when dissolved, bond to or associate with the first type of solid polymeric stabilizer and also dissolve in the liquid suspending medium to provide dispersion and steric protection for the particles. Also, liquid polymeric stabilizers may be used to advantage, especially in SPD light valve films, as described for example in U.S. Patent No. 5,463,492.

Inorganic and organic particles may be used in a light valve suspension, and such particles may be either light absorbing or light reflecting in the visible portion of the electromagnetic spectrum.

Conventional SPD light valves have generally employed particles of colloidal size. As used herein the term colloidal means that the particles generally have a largest dimension averaging 1 micron or less. Preferably, most polyhalide or non-polyhalide types of particles used or intended for use in an SPD light valve suspension will have a largest dimension which averages 0.3 micron or less and more preferably averages less than one-half of the wavelength of blue light, i.e., less than 2000 Angstroms, to keep light scatter extremely low.

As described earlier, copper foil, conductive fabric or the like are affixed to the SPD electrodes so that they extend beyond the perimeter of the SPD film for convenient connection to a suitable voltage source. In prior art SPD films and SPD laminates a thin layer of conductive silver paste, such as DuPont conductor composition #4817N, is applied to the SPD electrodes with a brush and the solvent, e.g. butyl acetate, is allowed to evaporate. Then the copper foil, such as 3M Copper foil with Conductive Adhesive #1181 or conductive fabric, such as 3M EMI Suppression Products #517-2191, which both have an electrically conductive pressure-sensitive adhesive on one side, are affixed to the silver coated SPD electrodes.

WO 94/18599 discloses a connection between a power bus and a conducting layer of a thin film device comprising an adhesive including metallic particles and a conductive element adhered to the adhesive.

### DEFICIENCIES OF PRIOR ART SPD FILMS

When an electric field is applied through the SPD film via the copper foil or conductive fabric, the particles become aligned allowing light to pass through the cell. The light valve is thus relatively transparent in the ON state. Therefore, the maintenance of the contact between the copper foil or conductive fabric and the SPD electrode is critical to the operation of the SPD film or SPD laminate.

In the case of prior art SPD film, the relatively weak adhesion between the copper foil or conductive fabric, silver paste and the SPD electrodes frequently leads to loss of contact. This may be the result of the weight of the wires from the power supply pulling the copper foil or conductive fabric off the SPD electrode, the handling of the SPD film during its preparation for lamination or environmental conditions such as temperature variations and/or changes in humidity causing loss of contact. Even with SPD laminates, where the SPD film is sandwiched between two sheets of glass with two or more layers of transparent hot melt adhesive films, there have been cases where the relatively high temperatures and pressures used to laminate the SPD films have caused the weakly adhered copper foil or fabric to move off of the SPD electrode during the lamination process. The result is a non-functioning SPD laminate that will not switch to the ON state when voltage is applied to the copper foil or conductive fabric. This is very costly because the SPD film, hot melt adhesive film and glass substrates are all rendered useless.

Accordingly, it would be beneficial to provide an SPD that avoids these problems.

### SUMMARY

It is an object of the present disclosure to provide a conducting adhesive that provides a strong bond between the conductive bus-bar and the ITO-PET electrode of a SPD and, at the same time, maintains good electric conductivity.

An adhesive in accordance with an embodiment of the present application preferably utilizes silver containing epoxy or silver containing polymeric glue to offer a strong bond between the conductive bus-bar and the ITO-PET electrode and, at the same time, maintain a good electric conductivity.

A connection between a power bus and a conducting layer of a suspended particle device in accordance with an embodiment of the present application includes an adhesive combined with metallic particles such that they conduct electricity. The adhesive is applied to a surface of the conducting layer. A conducting copper foil or conducting fabric is adhered to the adhesive and electrically connected to the power bus.

A method for providing a connection between a power bus and a conducting layer of a suspended particle device in accordance with an embodiment of the present application includes mixing metallic particles into the adhesive, where the amount of metallic particles is based on weight, applying the adhesive with adhesive particles to the conducting layer, pressing a conductive element on the adhesive to adhere to the conducting layer, waiting a predetermined period of time and connecting the conductive element to the power bus.

A method for providing a connection between a power bus and a conducting layer of a suspended particle device in accordance with an embodiment of the present application includes mixing metallic particles into the adhesive, where the amount of metallic particles is 65%-90% by weight, applying the adhesive with the metallic particles to the conducting layer, waiting a predetermined period of time, pressing a conductive element on the adhesive to adhere to the conducting layer and connecting the conductive element foil to the power bus.

A method for providing a connection between a power bus and a conducting layer of a suspended particle device in accordance with an embodiment of the present application includes mixing metallic particles into the adhesive, where the amount of metallic particles is 65%-90% by weight, applying the adhesive with the metallic particles to the conducting layer, pressing a conductive element on the adhesive to adhere to the conducting layer, waiting a predetermined period of time,
connecting the conductive copper foil to the power bus, separating the conductive element from the adhesive and reapplying the conductive element to the adhesive.

### BRIEF DESCRIPTION OF THE DRAWINGS

Fig. 1 is an illustration of an SPD film with a conductive bus-bar; and
Fig. 2 illustrates the requirements for measuring peel strength (as discussed herein) of a test sample.

### DETAILED DESCRIPTION OF THE EMBODIMENTS

The present disclosure is specifically directed to the use of film including a layer formed by cross-linking an emulsion, and to laminated films produced thereby. See, for example, U.S. Patent Nos. 5,463,491 and 5,463,492, and U.S. Patent Application Serial No. 10/898,303, published as US 2005/0227061 on October 13, 2005, all of which are assigned to the assignee of the present invention. Various types of SPD emulsions, and methods of curing same, are described in U.S. Patent Nos. 6,301,040, 6,416,827, and 6,900,923. Such films and variations thereof may be cured through cross-linking brought about by exposing the films to (1) ultraviolet radiation, (2) electron beams or (3) heat. All of the patents and patent applications and other references cited in this application are hereby incorporated herein by reference.

### Materials and characterization instrument:

Several different types of adhesion systems, e.g. silver containing epoxy, GOOP glue (e.g. Amazing GOOP® adhesive ("GOOP") ("Amazing GOOP" is a registered trademark of Eclectic Products, Inc. Corporation), Dupont silver paste (e.g. Dupont Conductor Paste #4817N sold by Dupont Electronic Materials), lab-made glue and silver containing GOOP glue with several different conductive materials, e.g. single side adhesive containing conductive copper foil (1.4mil thickness), adhesive-free conductive copper foil (2mil and 1.4mil thickness) and single side adhesive containing conductive fabric, have been tested.

Adhesives with and without silver were obtained and used to affix copper foil and conductive fabric to SPD electrodes. Conductive metal particles such as silver (Ag) and zinc (Zn) were added to the adhesive prior to use to impart conductivity. Copper foils with and without conductive adhesive and conductive fabric with a layer of conductive adhesive were utilized for these tests. The peel strength of the bond between the SPD electrode and the test foil or fabric samples was measured with the Shimadzu EZ Test apparatus. These tests demonstrated a strong bond between the improved conductive bus-bar and the ITO-PET electrode and, at the same time, good electric conductivity for operation of the SPD film or SPD laminate.

Different conductive materials were used for the bus-bars, e.g., 2 mil thick conductive copper foil with conductive adhesive coating on only one side; 1.4 mil and 2 mil thick conductive copper foils without adhesive coating on either side and conductive fabric with adhesive coating on only one side. Silver paste, in which silver micro- and nano-particles were pre-dispersed in organic solvent, e.g. butyl acetate, from Dupont, silver-containing epoxy , e.g. EPO-TEK® EE129-4 epoxy adhesive ("EPO-TEK") sold by Electron Microscopy Sciences of Hatfield, PA (EPO-TEK is a registered trademark of Epoxy Technology Inc. of Billerica, Massachusetts), and household glue, e.g. GOOP, were used as commercial available materials.

The Shimadzu Trapezium 2 EZ-S Test system made by Shimadzu Scientific Instruments, Inc. of Columbia, Maryland was used to measure the peel strength of the bonded ITO-PET electrode and conductive bus-bar.

### Procedures:

### Sample preparation:

Method #1: The silver-containing EPO-TEK epoxy system (bus-bar placement first, curing follows). First, the two epoxy elements, part A and part B were well mixed at 1:1 ratio at room temperature in a proper container and a thin layer of this mixture was applied on the ITO-PET electrode. The conductive copper foil or conductive fabric (bus-bar) was placed on top of the thin layer of epoxy mixture and gently pressed down to make sure that the conductive layer fully contacted the epoxy mixture. Care was taken to prevent any un-contacted area or air bubbles between the conductive layer and silver-containing epoxy mixture which will dramatically reduce the bonding strength and may cause an electric disconnection. Finally, the sample was allowed to sit for at least 24 hours at room temperature or a shorter period of time at higher temperatures to fully cure the epoxy mixture. Before use, the conductivity of the sample was checked with an Ohmmeter to ensure it was properly connected.

Method #2: A second EPO-TEK epoxy system (cure first, bus-bar placement follows). In this approach, the two epoxy elements, part A and part B were well mixed at 1:1 ratio at room temperature in a proper container and a thin layer of this mixture was applied on the ITO-PET electrode. The sample was then allowed to sit for at least 24 hours at room temperature or a shorter period of time at higher temperatures to fully cure the epoxy mixture. The conductive copper foil or conductive fabric (bus-bar) was placed on top of the cured thin layer of epoxy mixture and gently pressed down to make sure that the conductive layer fully contacts with the cured epoxy thin layer. This procedure is similar to that used for prior art SPD films and laminates using DuPont conductor composition #4817N. Care was taken to prevent any un-contacted area or air bubbles between the conductive layer and epoxy mixture which will dramatically reduce the bonding strength and may cause an electric disconnection.

Method #3: EPO-TEK epoxy/glue system (cure first, bus-bar placement follows). The two epoxy elements part A, part B (1:1) and glue were well mixed at pre-determined ratio (in this case, (part A + part B) / glue is at 1:1 ratio) at room temperature in a proper container and a thin layer of this mixture was applied on the ITO-PET electrode. Second, the sample was allowed to sit for at least 24 hours at room temperature or a shorter period of time at higher temperatures to fully cure the epoxy mixture. The conductive copper foil or conductive fabric (bus-bar) was placed on top of the cured thin layer of epoxy/glue mixture and gently pressed down to make sure that the conductive layer fully contacts with the cured epoxy thin layer. Care was taken to prevent any un-contacted area or air bubbles between the conductive layer and the epoxy/glue mixture which will dramatically reduce the bonding strength and may cause an electric disconnection.

Method #4: The glue system (bus-bar placement first, drying follows). For comparison purposes plain glue, i.e. glue containing no silver, was directly applied on both ITO-PET electrode and conductive copper foil or conductive fabric (bus-bar) in a thin layer. The two parts were mated together by gentle force to make sure that a full contact through the whole conductive copper foil or conductive fabric area is achieved. The sample was allowed to sit in a well ventilated area for at least several hours to dry out the residual solvent in the glue completely.

Finally, the samples were cut to the desired dimensions for testing and applications as is described below.

In other examples where bus-bar placement was first with drying to follow, organic solvents, e.g. toluene or propyl acetate were used to dilute the glue prior to repeating the steps above for connecting the conductive copper foil or conductive fabric to the ITO-PET electrode.

In still other examples where bus-bar placement preceded drying, Dupont silver paste was mixed with the organic solvent, toluene or propyl acetate diluted glue in a ratio of glue/toluene or propyl acetate/silver paste (1/2/1). A lab-shaker was used to obtain a homogeneous dispersion of these components. Once again the steps for connecting the conductive copper foil or conductive fabric (bus-bar) to the ITO-PET electrode were repeated.

In still other examples where drying was provided first followed by bus-bar placement, glue/silver (or other metal particles) was well mixed at pre-determined ratio of 8:2 at room temperature in a proper container and a thin layer of this mixture was applied on the ITO-PET electrode. Second, the sample was allowed to sit in a well ventilated area for at least several hours to dry out the residual solvent completely. The conductive copper foil or conductive fabric was placed on top of the dried thin layer of silvered glue (or otherwise metalized glue) and pressed down to make sure that the conductive layer fully contacts with the dried glue silver thin layer. This is similar to the procedure for prior art SPD films and laminates using DuPont conductor composition #4817N. Care was taken to prevent any un-contacted area or air bubbles between the conductive layer and dried glue silver thin layer which will dramatically reduce the bonding strength and may cause an electric disconnection.

### Peel strength test:

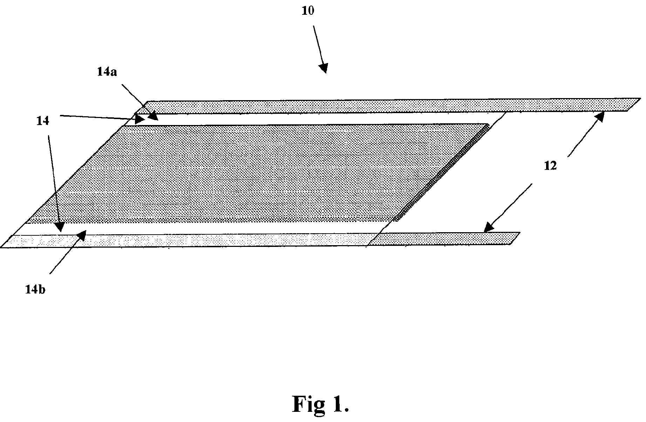

An SPD film 10 with conductive bus-bars 12 is shown in Figure 1, in which the conductive copper foil or conductive fabric of the bus-bars 12 is adhered to the conductive side 14a of an ITO-coated PET electrode 14. Element 14b denotes the non-conductive side of the ITO PET electrode 14.

The peel strength of the bond between the ITO-PET electrode 14 and the test conductive copper foil or fabric bus-bar 12 was measured with the Shimadzu Trapezium 2 EZ-S Test system. The tested specimen was prepared as described below. The bus-bars 12 are in turn connected to a power source via a power bus, cable or other electrical connection. While the present application uses the term "power bus" this term applies to any desired electrical connection between the bus-bar and the power source.

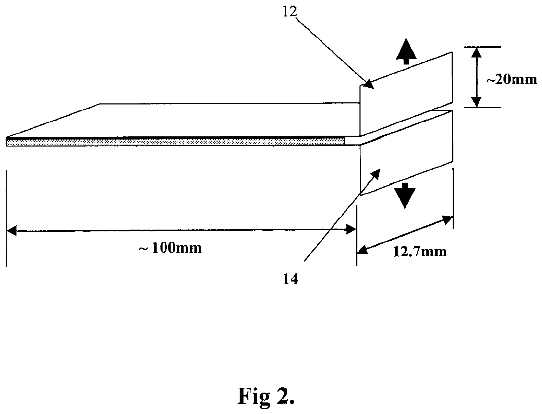

The bonded ITO-PET electrode 14 with conductive bus-bar 12 was cut into a 120mm x 12.7mm (length x width) strip. The ITO-PET electrode 14 and conductive bus-bar 12 at one end of the specimen were folded in opposite directions to form a T-shape (as shown in Figure 2). The clamping grips (not shown) of the EZ-S Test system were used to hold the specimen by the ITO-PET electrode 14 and conductive bus-bar 12. The instrument was operated to peel the specimen apart and record the peeling strength at a pre-determined grip head moving speed (crosshead speed). The unit of peel strength is in Newtons per 12.7mm width (N/12.7mm). In this case, the sample width of 12.7mm is an arbitrary number which was chosen based on the width of the conductive copper foil. For comparison with the literature, the width number should be converted to the same value, e.g. the same width. Table 1 and Table 2 list the detailed sample information along with the results of the peel test.

A re-attachment test was also conducted. In this test, the same foil/fabric bus-bar was re-attached right after the peel test. The re-attached specimen was then peeled apart again and new peel strength was recorded as re-attachment, all under same exact test conditions.

Table 1 and Table 2 list the examples of peel strength of ITO-PET electrode bonding with different conductive materials (conductive foil, adhesive side or non-adhesive side; conductive fabric, adhesive side) using different adhesives (silver epoxy mixture, pristine GOOP glue and silver GOOP glue mixture).

**Table 1. Peel strength of ITO-PET electrode with conductive bus-bar**

| Sample | | | Peel Strength (N/12.7mm) |
|---|---|---|---|
| Naked ITO/PET(prior art, no silver) | | Copper, Adhesive-side | 2.89 |
| Naked ITO/PET(prior art, no silver) | | Fabric, Adhesive-side | 3.50 |
| Commercial Silver Paste with ITO-PET substrate(prior art) | | Copper, Adhesive-side | 0.028 |
| | | | |
| EPO-TEK | Room Temp. curing, 24hrs | Copper, Adhesive-side | 5.94 |
| | | Copper, Non-Adhesive-side | 4.41 |
| | | Copper, Pure Strip(2mil thick) | 4.06 |
| | | Copper, Pure Strip(1.4mil thick) | 3.56 |
| | | Fabric, Adhesive-side | 3.34 |
| | | Fabric, Non-Adhesive-side | 2.32 |
| | 85°C curing, 1hr | Copper, Non-Adhesive-side | 4.75 |
| | | Fabric, Non-Adhesive-side | 3.77 |
| | | | |
| GOOP | Original | Copper, Non-adhesive-side | 6.15 |
| | Propyl acetate diluted | Copper, Non-adhesive-side | 8.30 |
| | Toluene diluted | Copper, Pure Strip(2mil thick) | 4.32 |
| | | Fabric, Adhesive-side | 10.08 |
| | | Fabric, Non-Adhesive-side | 2.50 |
| | | | |
| Silver + GOOP | Propyl acetate diluted | Copper, Non-adhesive-side | 1.59 |
| | | | |
| Silver + GOOP | Toluene diluted | Copper, Adhesive-side | 1.91 |
| | | Copper, Non-Adhesive-side | 2.18 |
| | | Copper, Pure Strip(2mil thick) | 1.40 |
| | | Copper, Pure Strip(1.4mil thick) | 0.83 |
| | | Fabric, Adhesive-side | 4.44 |
| | | Fabric, Non-Adhesive-side | 1.03 |

**Table 2. Peel strength of ITO-PET electrode with conductive bus-bar**

| Sample | | | Peel Strength (N/12.7mm) |
|---|---|---|---|
| EPO-TEK-(100%) Method #2 | Room Temp. curing, 24hrs | Fabric, Adhesive-side | 2.58 |
| EPO-TEK-(100%) Method #2 | Room Temp. curing, 24hrs | Fabric, Adhesive-side Re-attachment | 1.65 |
| | | | |
| EPO-TEK-+ GOOP (1/1) Method #3 | Room Temp. curing, 24hrs | Fabric, Adhesive-side | 3.76 |
| EPO-TEK-+ GOOP (1/1) Method #3 | Room Temp. curing, 24hrs | Fabric, Adhesive-side, Re-attachment | 3.92 |
| | | | |
| EPO-TEK-+ Lab-Glue (1/1) Method #3 | Room Temp. curing, 24hrs | Fabric, Adhesive-side | 2.00 |
| | | | |
| Silver Paste + GOOP (8/2) Method #4 | Toluene diluted | Fabric, Adhesive-side | 2.82 |
| | | | |
| Zinc Powder + GOOP (8/2) Method #4 | Toluene diluted | Fabric, Adhesive-side | 3.88 |

Referring to Fig. 1, copper foil with conductive adhesive adhered directly to the conductive side of ITO-PET electrode 14 in the absence of a silver paste layer (Naked ITO-PET) gives a strong bond but, because the adhesive of the conductive foil is significantly lower in conductivity than silver, it often results in poor electrical conductivity of the ITO-PET bus-bar. In the prior art SPD film, a thin layer of conductive silver paste was coated on top of conductive side of ITO-PET electrode 14 and conductive copper foil was adhered to the top of this thin silver layer as the bus-bar 12. This procedure gave good electrical conductivity between the ITO-PET electrode and conductive copper foil. Unfortunately, the adhesion between conductive bus-bar 12 and ITO-PET electrode 14 was jeopardized, owing to the weak bonding of the silver paste layer. The conductive bus-bar 12 was easily peeled off from the ITO-PET electrode 14 and it was often found that large areas of silver paste layer lost contact with ITO-PET electrode, which led to the failures in control of the SPD film or SPD film laminate.

### Discussion of Results

### 1. Naked ITO-PET substrate vs. commercial silver paste coated ITO-PET substrate:

Table 1 shows that the naked ITO-PET electrode 14 bonded strongly with the conductive copper foil bus-bar 12, but when silver paste was used as the interlayer to improve the electric conductivity (the prior art practice), the bonding strength decreased dramatically from 2.89 N/12.7mm (for copper, adhesive side) or 3.50 N/12.7mm (for conductive fabric, adhesive side) to only 0.028 N/12.7mm.

### 2. Commercial silver paste coated ITO-PET substrate vs. silver containing epoxy as the adhesive layer:

From Table 1, when silver-containing epoxy replaced the silver paste as the conductive enhancement interlayer, the peel strength between the adhesive side of copper foil (bus-bar 12) and the ITO-PET electrode 14 was 5.94 N/12.7mm, more than 200 times greater than the value of the adhesive side of the copper and the ITO-PET electrode (0.028 N/12.7mm). Even where the non-adhesive side of the copper foil was used the peel strength (4.41 N/12.7mm) was significantly higher than that of the adhesive side of the copper and the ITO-PET electrode 14 using the silver paste. Similarly, the peel strength between the adhesive side of conductive fabric (bus-bar 12) and the ITO-PET electrode 14 was 3.34 N/12.7mm, more than 100 times greater than the value of the adhesive side of the copper and the ITO-PET electrode (0.028 N/12.7mm) when silver paste was used. Also the non-adhesive side of the conductive fabric and the ITO-PET electrode 14 peel strength (2.32 N/12.7mm) was significantly higher than that of the adhesive side of the copper and the ITO-PET substrate using silver paste.

To investigate the effect of the thickness of copper foil on the bonding strength, two different thicknesses of non-adhesive-containing copper foil were tested as the bus-bar 12 with the silver-containing epoxy. The peel strengths of 4.06 N/12.7mm for 2mil thick copper foil and 3.56 N/12.7mm for 1.4mil thick copper foil were again much higher than the peel strength of the adhesive side of the copper and the ITO-PET electrode using the sliver paste. In addition, 2mil thick copper foil provides higher adhesion than 1.4 mil thick copper foil.

To further improve efficiency, the EPO-TEK silver-containing epoxy was cured at 85°C and the curing time decreased from 24 hours at room temperature to only 1 hour. This not only drastically shortened processing time, but also increased the peel strengths for the non-adhesive sides of the copper foil and conductive fabric from 4.41 N/12.7mm, and 2.32 N/12.7mm to 4.75 N/12.7mm and 3.77 N/12.7mm, respectively.

A possible disadvantage of the silver-containing epoxy materials, however, is that some epoxies can degrade the SPD film if the epoxy contacts the light-modulating element of the SPD film. This situation is especially likely to occur if the epoxy is cured at elevated temperatures (e.g. >25°C) which are most efficient as noted above. The potential problem can be reduced or eliminated by using the GOOP glue or other adhesive materials that do not degrade the SPD film as is discussed further below.

### 3. Commercial silver paste coated ITO-PET substrate vs. silver containing GOOP glue as adhesive layer:

From Table 1, when solvent diluted silver-containing GOOP glue (silver/GOOP/toluene 1:1:2) was used in place of Dupont silver paste as the conductive enhancement interlayer, the peel strength between the adhesive side of the copper foil bus-bar 12 and the ITO-PET electrode 14 was 1.91 N/12.7mm, significantly higher than simple silver paste coated sample (0.028 N/12.7mm) under the same condition. The non-adhesive side of the copper foil bus-bar and the ITO-PET electrode 14 peel strength was 2.18 N/12.7mm. Using the 2mil pure copper strip it was 1.40 N/12.7mm while using the 1.4 mil pure copper strip provided peel strength of (0.83 N/12.7mm). All of these peel strength values were significantly higher than if the commercial silver paste was used. The values for the adhesive side of the conductive fabric (4.44 N/12.7mm) and the non-adhesive side of the conductive fabric (1.03 N/12.7mm) were also impressive and superior when compare to use of the silver paste. The organic solvent toluene was added to aid in mixing the silver and GOOP glue. While a 2:1 ratio of solvent to glue was used, the present disclosure is not limited to this ratio. Any amount of solvent suitable to allow for mixing of the metallic particles into the glue may be used.

### 4. Silver-containing GOOP glue vs. GOOP glue itself:

Table 1 shows that when silver particles were mixed with GOOP glue, the bonding capability decreased (e.g. 6.15 N/12.7mm peel strength for original GOOP with non-adhesive side of copper foil vs. 2.18 N/12.7mm for GOOP + silver with non-adhesive side of copper foil and 10.08 N/12.7mm for toluene diluted GOOP with the adhesive side of conductive fabric vs. 4.44 N/12.7mm for toluene diluted GOOP + silver with the adhesive side of conductive fabric). In order to make sure the silver-containing glue system had sufficient bonding capability, the processing parameters (temperature, mixing ratio between GOOP glue, silver paste and dispersant (e.g. organic solvent) were adjusted to obtain a system which, not only offered strong bonding between the conductive bus-bar and the ITO-PET substrate, but also had good conductivity.

Thus, in a preferred embodiment silver particle containing GOOP glue, in which 80% silver particles disperse in 20% GOOP glue by weight gives high bonding strength e.g. 2.82 N/12.7mm (Table 2) peel strength compared to that of prior art (0.028 N/12.7mm, Table 1).

### 5. Silver containing epoxy diluted with glue vs. silver containing epoxy itself:

In order to further decrease the cost, while maintaining good bonding strength and conductivity of the bus-bar 12, EPO-TEK silver containing epoxy material mixed with GOOP glue or lab-made glue (EPO-TEK/glue 1:1) as bonding media was investigated. Table 2 shows that the peel strength of 3.76 N/12.7mm for EPO-TEK+GOOP 1/1 is even higher than that of silver containing epoxy with the fabric adhesive-side (Table 1, EPO-TEK, Fabric, Adhesive-side, 3.34 N/12.7mm). Although lab-made glue, a low molecular weight acrylate copolymer, under the same conditions only has a peel strength of 2.00 N/12.7mm for EPO-TEK+lab-glue (1/1) in Table 2, lower than that of epoxy with GOOP glue, it is still far stronger than the prior art, which only has peel strength of 0.028 N/12.7mm.

### 6.Re-attachment of conductive adhesive bus-bar onto epoxy glue coated ITO PET surface:

In case of delamination or misalignment of conductive bus-bar 12 during the lamination process or handling of the bus-bar, it is necessary to investigate the re-attached bonding capability of conductive elements on silver coated ITO PET electrode 14. Table 2 shows that, for an epoxy-only silver system (EPO-TEK 100%, method #2), the peel strength of re-attached conductive fabric is 1.65 N/12.7mm compared to its original vale 2.58 N/12.7mm. Under the same conditions, the epoxy-glue system (EPO-TEK + GOOP 1/1, method #3) peel strength of re-attached fabric is 3.92 N/12.7mm compared to its original bonding peel strength of 3.76 N/12.7mm. Method #1 is a one-time only process for attaching the bus-bar. Thus, method #2, method #3 and method #4, which are conducive to bus-bar re-attachment, are preferred. The presence of glue not only reduces materials cost dramatically, but also maintains the bonding capability for re-attachment. Obviously this would be a great advantage during manufacturing where handling of the bus-bar may result in accidental detachment or misalignment.

### 7. Other conductive metals, such as copper (Cu), Zinc (Zn), Iron (Fe), magnesium (Mg) may be used as conductive media.

Zinc powder was dispersed in toluene diluted GOOP glue (2g solvent / 1g glue) by weight ratio of 80% zinc with 20% solid glue. Table 2 shows that after complete drying, the peel strength of fabric on ITO coated PET with zinc/glue as bonding media is 3.88 N/12.7mm, considerably higher than prior art (0.028 N/12.7mm) and comparable with silver particle/glue or silver particle/epoxy systems (refer Table 1). This has a great advantage in terms of material's cost, availability and processing ability considering the relative ease of mixing dry zinc powder in solvent diluted glue.

### Conclusions

Silver-containing epoxy can significantly improve the bonding (peel strength) between bus-bar materials, such as conductive copper foil and conductive fabric, and the ITO-PET electrode substrate. Diluting the silver containing epoxy with a glue significantly reduces costs while maintaining relatively high peel strength.

Using method #2 to apply the conductive adhesive with the silver containing epoxy or method #3 to apply the silver containing epoxy diluted with glue or method #4 to apply the conductive metal containing glue allows for reattachment of misaligned or accidentally detached conductive elements with restoration of high peel strength.

Polymeric GOOP glue mixed with silver particles can also serve this purpose without potential degradation of the light-modulating element of the SPD film and at lower cost, but requires more labor. The reduced risk of damage to the light modulating element, however, is likely worth the additional labor.

Different organic solvents affect the performance of bonding capability of the GOOP glue with ITO-PET electrode substrate. Although the mixture of GOOP glue with silver particles decreases the bonding strength between the bus-bar 12 and the ITO-PET electrode 14, it is still significantly higher than the bonding strength between commercial silver paste and the ITO-PET substrate currently utilized for SPD films and SPD laminates. For cost control purposes, adhesive-free conductive foil (pure conductive foil) is preferably used instead of adhesive-containing conductive foil. Conductive fabric also provides comparably good bonding strength with better flexibility and durability. Other synthetic adhesives may provide a more flexible way of balancing cost and performance, and may offer a wider range of materials choices and bonding capabilities.

Conductive metal particles other than silver such as, but not limited to, zinc, copper, Iron and magnesium may be added to the adhesive to impart conductivity.

Thus, in accordance with the present disclosure a connection between an electrode of an SPD device and a power bus thereof preferably includes an adhesive with a predetermined amount of metallic particle mixed therein affixed to the electrode and a conductive copper foil, or other conductor adhered to the adhesive and connected to or forming at least a part of the power bus. The different embodiments disclosed herein provide different advantages in various areas including reduced cost, ease of manufacture, tolerance for reattachment etc.

Although the present invention has been described in relation to particular embodiments thereof, many other variations and modifications and other uses will become apparent to those skilled in the art. It is preferred, therefore, that the present invention be limited not by the specific disclosure herein.

## Claims

1. A suspended particle device connectable to a power bus for applying power to said device, and comprising a connection for connecting the device to said power bus, wherein the connection comprises:
an adhesive including metallic particles such that the adhesive conducts electricity, the adhesive applied to a surface of the conducting layer of the suspended particle device, and
a conductive element adhered to the adhesive and connectable to the power bus, and
wherein the metallic particles are provided in a ratio of 65-90 % metallic particles to 10-35% adhesive by weight.

2. The device of claim 1, wherein the conductive element further comprises a conducting adhesive applied to a first surface thereof, wherein the conductive element is adhered to the adhesive via the first surface.

3. The device of claim 1, wherein the conductive element is a conductive copper foil that forms at least a part of the power bus.

4. The device of claim 3, wherein the conductive foil has a thickness of 1.4 mil.

5. The device of claim 3, wherein the conductive foil has a thickness of 2 mil.

6. The device of claim 1, wherein the conductive material is a conductive fabric that forms at least a part of the power bus.

7. The device of claim 1, wherein the adhesive is a mixture of an organic solvent and polymer glue, wherein an amount of organic solvent used is sufficient to allow the polymer glue to be mixed.

8. The device of claim 1, wherein the metallic particles are silver particles.

9. The device of claim 1, wherein the metallic particles are zinc particles.

10. The device of claim 1, wherein the adhesive is an epoxy material.

11. A method for providing a connection between a power bus and a conducting layer of a suspended particle device comprises:
mixing metallic particles into an adhesive, where the amount of metallic particles is 65%-90% metallic particles to 10%-35% adhesive by weight; applying the adhesive with metallic particles to the conducting layer;
pressing a conductive element on the adhesive to adhere to the conducting layer;
waiting a predetermined period of time; and
connecting the conductive element to the power bus.

12. The method of claim 11, wherein the conductive element forms at least a portion of the power bus.

13. The method of claim 11, wherein adhesive is a mixture of an organic solvent and polymer glue, wherein an amount of organic solvent used is sufficient to allow the polymer glue to be mixed.

14. The method of claim 11, wherein the metallic particles are silver particles.

15. The method of claim 11, wherein the metallic particles are zinc particles.

16. The method of claim 11, wherein the adhesive is a mixture of equal parts epoxy and polymer glue.

17. The method of claim 11, wherein the adhesive is an epoxy.

18. A method for providing a connection between a power bus and a conducting layer of a suspended particle device comprises:
mixing metallic particles into an adhesive, where the amount of metallic particles is 65%-90% metallic particles to 10%-35% adhesive by weight; applying the adhesive with metallic particles to the conducting layer;
waiting a predetermined period of time;
pressing a conductive element on the adhesive to adhere to the conducting layer; and
connecting the conductive element to the power bus.

19. The method according to claim 11 for providing a connection between a power bus and a conducting layer of a suspended particle device, wherein the method further comprises:
separating the conductive element from the adhesive; and
reapplying the conductive element to the adhesive.

## Patentansprüche

1. Suspensionsteilchen-Vorrichtung (SPD), die an einen Energiebus zur Stromversorgung der Vorrichtung anschließbar ist und einen Anschluss zum Anschließen der Vorrichtung an den Energiebus aufweist, wobei der Anschluss Folgendes umfasst:
einen Klebstoff mit einem Gehalt an metallischen Teilchen, so dass der Klebstoff Elektrizität leitet, wobei der Klebstoff auf eine Oberfläche der leitenden Schicht der Suspensionsteilchen-Vorrichtung aufgebracht ist, und
ein leitendes Bauelement, das am Klebstoff haftet und an den Energiebus anschließbar ist,
wobei die metallischen Teilchen in einem Verhältnis von 65-90 Gew.-% metallische Teilchen zu 10-35 Gew.-% Klebstoff vorliegen.

2. Vorrichtung nach Anspruch 1, wobei das leitende Bauelement ferner einen leitenden Klebstoff, der auf eine erste Oberfläche des Bauelements aufgebracht ist, aufweist, wobei das leitende Element am Klebstoff über die erste Oberfläche haftet.

3. Vorrichtung nach Anspruch 1, wobei es sich beim leitenden Element um eine leitende Kupferfolie handelt, die mindestens einen Teil des Versorgungsbusses bildet.

4. Vorrichtung nach Anspruch 3, wobei die leitende Folie eine Dicke von 1,4 mil aufweist.

5. Vorrichtung nach Anspruch 3, wobei die leitende Folie eine Dicke von 2 mil aufweist.

6. Vorrichtung nach Anspruch 1, wobei es sich beim leitenden Material um ein leitendes Gewebe handelt, das mindestens einen Teil des Versorgungsbusses bildet.

7. Vorrichtung nach Anspruch 1, wobei es sich beim Klebstoff um ein Gemisch aus einem organischen Lösungsmittel und einem Polymerklebstoff handelt, wobei die Menge des verwendeten organischen Lösungsmittels ausreicht, das Vermischen des Polymerklebstoffs zu ermöglichen.

8. Vorrichtung nach Anspruch 1, wobei es sich bei den metallischen Teilchen um Silberteilchen handelt.

9. Vorrichtung nach Anspruch 1, wobei es sich bei den metallischen Teilchen um Zinkteilchen handelt.

10. Vorrichtung nach Anspruch 1, wobei es sich beim Klebstoff um ein Epoxymaterial handelt.

11. Verfahren zur Bereitstellung eines Anschlusses zwischen einem Energiebus und einer leitenden Schicht einer Suspensionsteilchen-Vorrichtung, umfassend:
das Einmischen von metallischen Teilchen in einen Klebstoff, wobei der Anteil der metallischen Teilchen 65-90 Gew.-% metallische Teilchen auf 10-35 Gew.-% Klebstoff beträgt;
das Aufbringen des Klebstoffs mit den metallischen Teilchen auf die leitende Schicht;
das Anpressen eines leitenden Bauelements an den Klebstoff, um eine Haftung an der leitenden Schicht zu erreichen;
das Abwarten einer vorgegebenen Zeitspanne; und
das Anschließen des leitenden Bauelements an den Energiebus.

12. Verfahren nach Anspruch 11, wobei das leitende Element mindestens einen Teil des Energiebusses bildet.

13. Verfahren nach Anspruch 11, wobei es sich beim Klebstoff um ein Gemisch aus einem organischen Lösungsmittel und einem Polymerklebstoff handelt, wobei die Menge des verwendeten organischen Lösungsmittels ausreicht, das Vermischen des Polymerklebstoffs zu ermöglichen.

14. Verfahren nach Anspruch 11, wobei es sich bei den metallischen Teilchen um Silberteilchen handelt.

15. Verfahren nach Anspruch 11, wobei es sich bei den metallischen Teilchen um Zinkteilchen handelt.

16. Verfahren nach Anspruch 11, wobei es sich beim Klebstoff um ein Gemisch aus gleichen Teilen Epoxymaterial und Polymerklebstoff handelt.

17. Verfahren nach Anspruch 11, wobei es sich beim Klebstoff um ein Epoxymaterial handelt.

18. Verfahren zur Bereitstellung eines Anschlusses zwischen einem Energiebus und einer leitenden Schicht einer Suspensionsteilchen-Vorrichtung, umfassend:
das Einmischen von metallischen Teilchen in einen Klebstoff, wobei der Anteil der metallischen Teilchen 65-90 Gew.-% metallische Teilchen auf 10-35 Gew.-% Klebstoff beträgt;
das Aufbringen des Klebstoffs mit den metallischen Teilchen auf die leitende Schicht;
das Abwarten einer vorgegebenen Zeitspanne;
das Anpressen eines leitenden Bauelements an den Klebstoff, um eine Haftung an der leitenden Schicht zu erreichen; und
das Anschließen des leitenden Bauelements an den Energiebus.

19. Verfahren nach Anspruch 11 zur Bereitstellung eines Anschlusses zwischen einem Energiebus und einer leitenden Schicht einer Suspensionsteilchen-Vorrichtung, wobei das Verfahren ferner Folgendes umfasst:
das Abtrennen des leitenden Bauelements vom Klebstoff; und
das erneute Aufbringen des Bauelements auf den Klebstoff.

## Revendications

1. Dispositif de particules en suspension pouvant être raccordé à un bus d'alimentation en vue de l'alimentation dudit dispositif, et comprenant un raccord pour raccorder le dispositif audit bus d'alimentation, dans lequel le raccord comprend :
un adhésif incluant des particules métalliques telles que l'adhésif conduise l'électricité, l'adhésif étant appliqué sur une surface de la couche conductrice du dispositif de particules en suspension, et
un élément conducteur collé à l'adhésif et pouvant être raccordé au bus d'alimentation, et
dans lequel les particules métalliques sont prévues en un rapport de 65 à 90 % de particules métalliques à 10 à 35 % d'adhésif en poids.

2. Dispositif selon la revendication 1, dans lequel l'élément conducteur comprend en outre un adhésif conducteur appliqué sur une première surface de celui-ci, dans lequel l'élément conducteur est collé à l'adhésif par l'intermédiaire de la première surface.

3. Dispositif selon la revendication 1, dans lequel l'élément conducteur est une feuille de cuivre conductrice qui constitue au moins une partie du bus d'alimentation.

4. Dispositif selon la revendication 3, dans lequel la feuille conductrice a une épaisseur de 1,4 mil.

5. Dispositif selon la revendication 3, dans lequel la feuille conductrice a une épaisseur de 2 mil.

6. Dispositif selon la revendication 1, dans lequel le matériau conducteur est un tissu conducteur qui constitue au moins une partie du bus d'alimentation.

7. Dispositif selon la revendication 1, dans lequel l'adhésif est un mélange d'un solvant organique et de colle de polymère, dans lequel une quantité de solvant organique utilisée est suffisante pour permettre à la colle de polymère d'être mélangée.

8. Dispositif selon la revendication 1, dans lequel les particules métalliques sont des particules d'argent.

9. Dispositif selon la revendication 1, dans lequel les particules métalliques sont des particules de zinc.

10. Dispositif selon la revendication 1, dans lequel l'adhésif est un matériau époxy.

11. Procédé de fourniture d'un raccordement entre un bus d'alimentation et une couche conductrice d'un dispositif de particules en suspension qui comprend :
le mélange de particules métalliques dans un adhésif, où la quantité de particules métalliques est de 65 % à 90 % de particules métalliques à 10 % à 35 % d'adhésif en poids ;
l'application de l'adhésif contenant des particules métalliques sur la couche conductrice ;
le pressage d'un élément conducteur sur l'adhésif pour qu'il colle à la couche conductrice ;
l'attente pendant une durée prédéterminée ; et
le raccordement de l'élément conducteur au bus d'alimentation.

12. Procédé selon la revendication 11, dans lequel l'élément conducteur constitue au moins une partie du bus d'alimentation.

13. Procédé selon la revendication 11, dans lequel l'adhésif est un mélange d'un solvant organique et d'une colle de polymère, dans lequel une quantité de solvant organique utilisée est suffisante pour permettre à la colle de polymère d'être mélangée.

14. Procédé selon la revendication 11, dans lequel les particules métalliques sont des particules d'argent.

15. Procédé selon la revendication 11, dans lequel les particules métalliques sont des particules de zinc.

16. Procédé selon la revendication 11, dans lequel l'adhésif est un mélange de parts égales d'époxy et de colle de polymère.

17. Procédé selon la revendication 11, dans lequel l'adhésif est une époxy.

18. Procédé de fourniture d'un raccordement entre un bus d'alimentation et une couche conductrice d'un dispositif de particules en suspension comprenant :
le mélange de particules métalliques dans un adhésif, où la quantité de particules métalliques est de 65 % à 90 % de particules métalliques à 10 % à 35 % d'adhésif en poids ;
l'application de l'adhésif contenant des particules métalliques sur la couche conductrice ;
l'attente pendant une durée prédéterminée ;
le pressage d'un élément conducteur sur l'adhésif pour qu'il colle à la couche conductrice ; et
le raccordement de l'élément conducteur au bus d'alimentation.

19. Procédé selon la revendication 11 pour fournir un raccordement entre un bus d'alimentation et une couche conductrice d'un dispositif de particules en suspension, dans lequel le procédé comprend en outre :
la séparation de l'élément conducteur de l'adhésif ; et
la nouvelle application de l'élément conducteur sur l'adhésif.
